# EUROPEAN PATENT SPECIFICATION

(11) **EP 1 642 509 B1**
(45) Date of publication and mention of the grant of the patent: **07.01.2009**
(21) Application number: 05008185.0
(22) Date of filing: 14.04.2005
(51) Int. Cl.: A41D 19/00, A41D 19/04, B29D 31/00

(54) **Gloves and method of manufacturing the same**
Handschuh und Verfahren zu dessen Herstellung
Gants et leur procédé de fabrication

(30) Priority: 01.10.2004 JP 2004289908
(43) Date of publication of application: 05.04.2006
(73) Proprietor: SUMITOMO RUBBER INDUSTRIES LIMITED, Kobe-shi, Hyogo-ken (JP)
(72) Inventor: Miyamoto, Yoshiaki, Kobe-shi Hyogo 651-0072 (JP); Lim, Sherine c/o Sumirubber Malaysia, 08000 Sungai Petani Kedah (MY); Hassan, Che Seman Bin c/o Sumirubber Malaysia, 08000 Sungai Petani Kedah (MY); Taib, Noryani Binti c/o Sumirubber Malaysia, 08000 Sungai Petani Kedah (MY)
(74) Representative: Manitz, Finsterwald & Partner GbR

(56) References cited:
- GB-A- 242 900
- US-A- 4 757 557
- PATENT ABSTRACTS OF JAPAN vol. 018, no. 517 (C-1254), 29 September 1994 (1994-09-29) & JP 06 173104 A (TAKI RUBBER KAGAKU KK), 21 June 1994 (1994-06-21)

## Description

### BACKGROUND OF THE INVENTION

### Field of the Invention

The present invention relates to a method of manufacturing gloves. More particularly, the present invention relates to a process for forming a pattern of gloves according to the preamble of claim 1. The features of the preamble of claim 1 are known from JP 06 173 104 A. Relevant technologies are also known from US 4 757 557 A and GB 242 900 A.

### Description of the Related Art

At general home and restaurants, rubber gloves have been utilized. General rubber gloves have been manufactured by a coagulant method. In the coagulant method, a hand mold, which is called "former", is first dipped into a coagulant, and then picked up. This dipping results in adherence of the coagulant to the surface of the hand mold. Next, the hand mold is dipped into a rubber latex composition, and is then picked up. This dipping results in adherence of the rubber latex composition to the surface of the hand mold. By drying this rubber latex composition, a coated film is formed on the surface of the hand mold. Upon heating of this coated film and the hand mold, a crosslinking agent included in the coated film causes a chemical reaction to allow the rubber to be crosslinked. According to this crosslinkage, gloves are obtained. Naps may be planted prior to the crosslinking as needed.

A colorant is blended in the rubber latex composition. The colorant is uniformly dispersed in the composition. The main body is colorized by this colorant. Depending on the type and amount of the colorant, gloves exhibiting a variety of colors are obtained. Such a coagulant method is disclosed in JP-A No. 2002-327324.

There are many applications of rubber gloves. For example, at general home, rubber gloves have been used for cooking foods and drinks, washing dishes, disposing raw garbage, laundry operations, cleaning and the like. From a hygienic point of view, it is not preferred to use rubber gloves upon cooking which had been used upon cleaning. It is necessary to provide and use multiple rubber gloves separately, depending on the application. When a lot of rubber gloves are provided, application of each rubber gloves must be discriminated. This discrimination is carried out based on the color. For example, pink rubber gloves are used in cooking, while blue rubber gloves are used in cleaning.

As described above, colorization of a rubber glove is executed by a colorant uniformly dispersed in a rubber latex composition, therefore, the rubber glove exhibits single color. Because variations of appearance of rubber gloves are not so wide, discrimination of applications based on the color can not be sufficiently performed. Rubber gloves exhibiting single color are not preferred in respect of their design.

An object of the present invention is to provide a manufacturing method which enables to yield gloves exhibiting a variety of appearances. Another object of the present invention is to provide gloves which are excellent in their design.

### SUMMARY OF THE INVENTION

The method of manufacturing a grove according to the present invention comprises:
(1) a first step of dipping a hand mold into a transparent latex composition to form a coat layer,
(2) a second step of forming a decorative layer on the surface of this coat layer, and
(3) a third step of forming a base layer through dipping this hand mold into another latex composition.

In the second step, the hand mold is dipped into water including an ink floated and ununiformly dispersed on the surface thereof, and the decorative layer is formed by transfer of this ink to the surface of the coat layer.

The glove according to the present invention has a base layer which comprises a polymer as a base material, a coat layer which comprises a polymer as a base material and which is transparent, and a decorative layer positioned between the base layer and the coat layer. A marble pattern is formed with the decorative layer. The base material of the base layer and coat layer is a rubber, and a rubber ink is used in the decorative layer.

### BRIEF DESCRIPTION OF THE DRAWINGS

Fig. 1 is a front view illustrating a glove according to one embodiment of the present invention;
Fig. 2 is an enlarged cross sectional view illustrating a part of the glove shown in Fig. 1;
Fig. 3 is a plane view illustrating an apparatus for manufacturing the glove shown in Fig. 1;
Fig. 4 is a longitudinal sectional view illustrating the apparatus shown in Fig. 3; and
Fig. 5 is a flow chart illustrating one example of a method of manufacturing the glove shown in Fig. 1.

### DESCRIPTION OF THE PREFERRED EMBODIMENTS

Hereinafter, the present invention is explained in detail on the basis of preferred embodiments with an appropriate reference to the drawing.

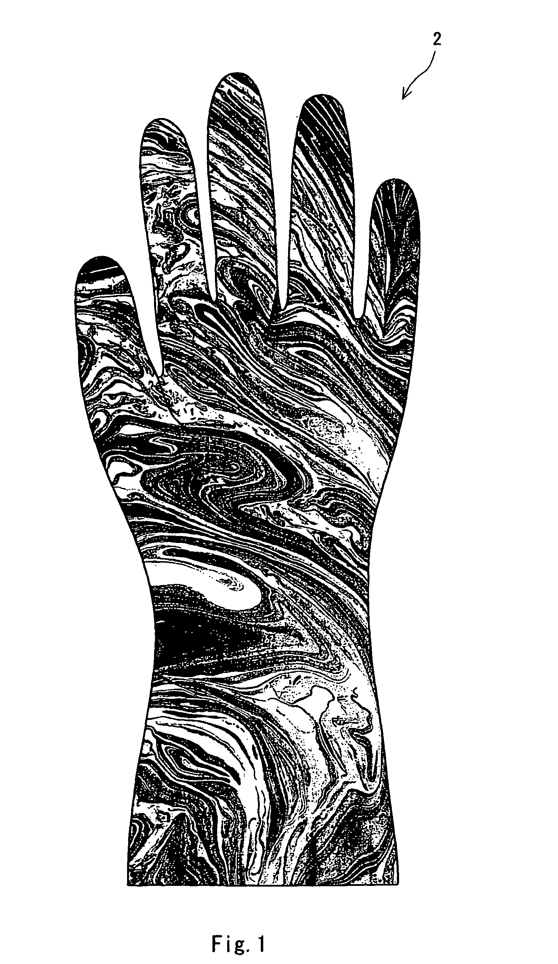

The glove 2 shown in Fig. 1 has a marble pattern. The marble pattern means a pattern generated by ununiform dispersion of a colorant. The marble pattern is also referred to as a multicolor pattern. Preferably, the marble pattern is obtained by marbling. In the marble pattern obtained by marbling, curved lines are principally found. The marble pattern attracts the preference of the people who has a look at the glove. This glove 2 has an excellent appearance.

Although Fig. 1 shows the side of the palm of the glove 2, similar marble pattern is also formed on the back side. According to the example shown in Fig. 1, the marble pattern is formed on the entire face of the glove 2, however, the marble pattern may be formed in part.

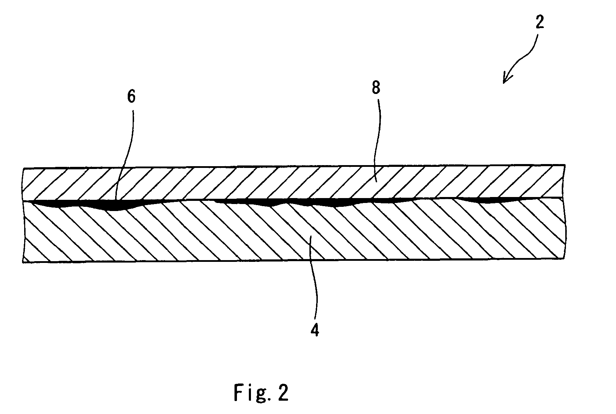

Fig. 2 is an enlarged cross sectional view illustrating a part of the glove 2 shown in Fig. 1. In Fig. 2, the upper side is the obverse side of the glove 2, while the bottom side is the reverse side of the glove 2. This glove 2 has a base layer 4, a decorative layer 6 and a coat layer 8. The decorative layer 6 is laminated on the base layer 4. The coat layer 8 is laminated on the decorative layer 6. When the glove 2 is worn, the base layer 4 is brought into contact with the hand of the human. The glove 2 may have a naps-planted layer on the bottom side of the base layer 4.

The base layer 4 is formed by crosslinking of a rubber composition. Illustrative examples of the base rubber of the base layer 4 include natural rubbers, acrylonitrile-butadiene copolymers, styrene-butadiene copolymers, polychloroprene and acrylic rubbers. A deproteinized natural rubber may be also used. In light of strength, a natural rubber is preferred. In light of the oil resistance, an acrylonitrile-butadiene copolymer is preferred. In place of a rubber, a synthetic resin may be also used. Illustrative examples of preferred synthetic resin include acrylic resins, polyurethane and polyvinyl chloride. Two or more polymers may be used in combination.

In the rubber composition for the base layer 4 is blended a crosslinking agent. Specific examples of the crosslinking agent include sulfur and organic sulfur compounds. Amount of the crosslinking agent to be blended is preferably 0.5 part by weight or greater, and more preferably 1.0 part by weight or greater per 100 parts by weight of the base rubber. The amount is preferably 5.0 parts by weight or less, and more preferably 3.5 parts by weight or less.

Usually, a vulcanization accelerator is blended in the rubber composition. Illustrative examples of preferred vulcanization accelerator include zinc N-ethyl-N-phenyldithiocarbamate, zinc dimethyldithiocarbamate, zinc diethyldithiocarbamate, zinc dibutyldithiocarbamate, 2-mercaptobenzothiazole zinc salts and tetramethylthiram disulfide. Amount of the vulcanization accelerator to be blended is preferably 0.5 part by weight or greater and 3.0 parts by weight or less per 100 parts by weight of the base rubber.

In the rubber composition may be blended a colorant (typically a pigment). Due to the colorant, the base layer 4 is colorized. Because the colorant is uniformly dispersed in the rubber composition, the base layer 4 exhibits single color.

To the rubber composition may be added additives such as zinc oxide, stearic acid, an antiaging agent, a filler and the like in an appropriate amount as needed.

In light of strength of the glove 2, the base layer 4 has a thickness of 0.15 mm or greater, and particularly 0.20 mm or greater. In light of softness of the glove 2, the base layer 4 has a thickness of 0.50 mm or less, and particularly 0.40 mm or less.

The decorative layer 6 comprises a colorant. The decorative layer 6 has a ununiform thickness. By use of two or more kinds of colorants in combination in the decorative layer 6, a marble pattern is formed. The entire face of the base layer 4 may be covered by the decorative layer 6, alternatively, a part of the base layer 4 may be covered by the decorative layer 6.

The coat layer 8 is present on the entire face of the glove 2. The coat layer 8 protects the decorative layer 6. The coat layer 8 is colorless and transparent. Because the coat layer 8 is transparent, the marble pattern formed with the decorative layer 6 is recognized as an appearance of the glove 2. The coat layer 8 may be colored and transparent.

The coat layer 8 is formed by crosslinking of a rubber composition similarly to the base layer 4. Illustrative examples of the base rubber of the coat layer 8 include natural rubbers, acrylonitrile-butadiene copolymers, styrene-butadiene copolymers, polychloroprene and acrylic rubbers. A deprotenized natural rubber may be also used. In light of the strength, a natural rubber is preferred. In light of the oil resistance, an acrylonitrile-butadiene copolymer is preferred. In place of a rubber, a synthetic resin may be also used. Illustrative examples of preferred synthetic resin include acrylic resins, polyurethane and polyvinyl chloride. Two or more polymers may be used in combination.

In the rubber composition of for the coat layer 8 may be blended a crosslinking agent. Specific examples of the crosslinking agent include sulfur and organic sulfur compounds. Amount of the crosslinking agent to be blended is preferably 0.5 part by weight or greater, and more preferably 1.0 part by weight or greater per 100 parts by weight of the base rubber. The amount is preferably 5.0 parts by weight or less, and more preferably 3.5 parts by weight or less.

Usually, a vulcanization accelerator is blended in the rubber composition. Illustrative examples of preferred vulcanization accelerator include zinc N-ethyl-N-phenyldithiocarbamate, zinc dimethyldithiocarbamate, zinc diethyldithiocarbamate, zinc dibutyldithiocarbamate, 2-mercaptobenzothiazole zinc salts and tetramethylthiram disulfide. Amount of the vulcanization accelerator to be blended is preferably 0.5 part by weight or greater and 3.0 parts by weight or less per 100 parts by weight of the base rubber.

To the rubber composition may be added additives such as zinc oxide, stearic acid, an antiaging agent, a filler and the like in an appropriate amount as needed.

In light of the protection of the decorative layer 6, the coat layer 8 has a thickness of 0.10 mm or greater, and particularly 0.15 mm or greater. In light of softness of the glove 2, the coat layer 8 has a thickness of 0.30 mm or less, and particularly 0.25 mm or less.

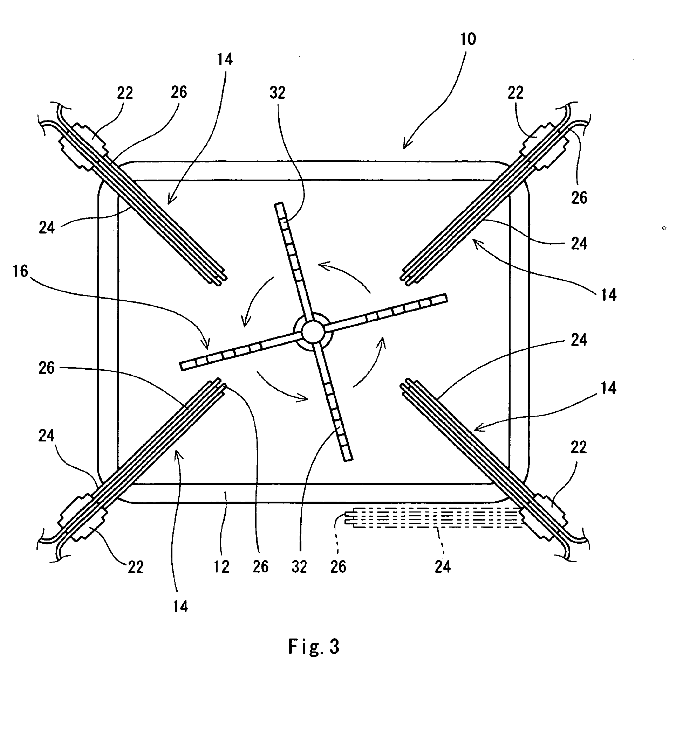

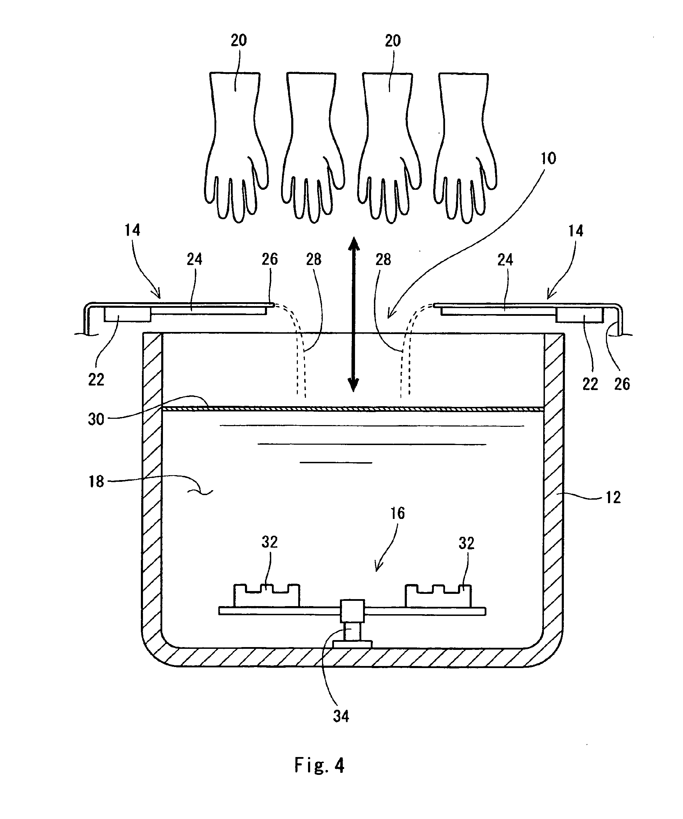

Fig. 3 is a plane view illustrating an apparatus 10 for use in manufacturing the glove 2 shown in Fig. 1, and Fig. 4 is a longitudinal sectional view of the same. This apparatus 10 has a water bath 12, four ink supplying parts 14 and a stirrer 16. The water bath 12 is filled with water 18. As shown in Fig. 4, a hand mold 20 is ready above the water bath 12.

The ink supplying parts 14 are positioned above the water bath 12. In the example shown in Fig. 3, the ink supplying parts 14 are positioned in the vicinity of the corner of the water bath 12. The ink supplying part 14 comprises a base stand 22, an arm 24 extending from this base stand 22, and a tube 26 disposed and fixed on this arm 24. According to the example shown in Fig. 3, two tubes 26 are disposed on one arm 24. Only one tube 26 may be disposed on one arm 24, while three or more tubes 26 may be also disposed.

An ink 28 is supplied from the tube 26 toward the water bath 12. This ink 28 is not hydrophilic. Typically, an oil-based ink may be used. This ink 28 has a property to float on the water 18. By supplying the ink 28, a thin ink layer 30 is formed on the surface of the water 18. Preferred ink 28 is a rubber ink. The rubber ink includes fine rubber powder containing a pigment, with the rubber powder being dispersed in a solvent. The rubber ink is excellent in cohesiveness with the base layer 4 and the coat layer 8. An ink 28 having a different color from that of the ink 28 supplied from one tube 26 may be supplied from another tube 26.

The ink supplying parts 14 can be retracted from the water bath 12 by rotation. What is indicated by a chain double-dashed line in Fig. 3 is the arm 24 and the tube 26 which are in the state of retraction. In Fig. 3, position of the retraction of only one ink supplying part 14 is shown, however, all ink supplying parts 14 can be retracted. When the ink 28 is supplied, the ink supplying parts 14 are in the position shown by the solid line. Following completion of supplying the ink 28, the ink supplying parts 14 are retracted. By the retraction, the area above the water bath 12 is opened.

The stirrer 16 is positioned approximately at the center of the bottom of the water bath 12. The stirrer 16 has four blades 32. The stirrer 16 rotates around the axis 34. According to this rotation, stirring of the water 18 is executed. This stirring also causes stirring of the ink layer 30. Because the rotation velocity of the stirrer 16 is so slow, the ink 28 and the water 18 are hardly mixed together. The stirring results in formation of the ink layer 30 having a spiral pattern. In other words, the ink 28 is dispersed in an ununiform manner on the surface of the water 18. When two or more inks 28 having a different color with each other are used, a spiral pattern is formed with these colors being present admixed.

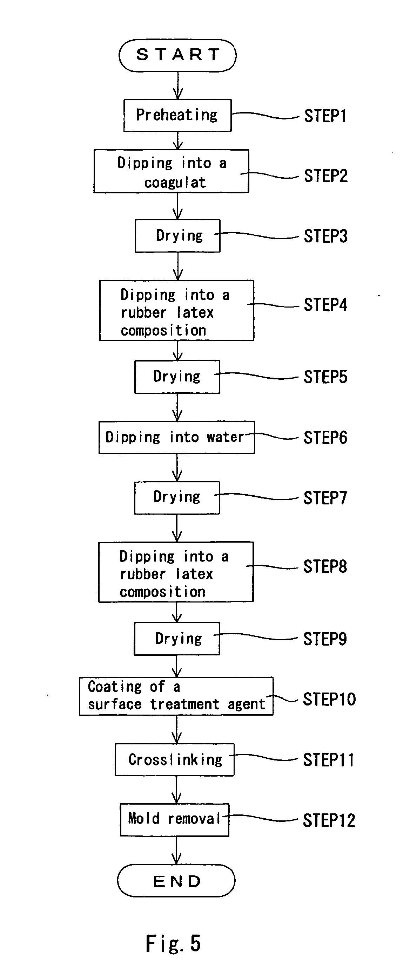

Fig. 5 is a flow chart illustrating one example of a method of manufacturing the glove 2 shown in Fig. 1. In this method of manufacturing, the hand mold 20 is first preheated (STEP 1) . The preheating elevates the temperature of the hand mold 20. The temperature of the hand mold 20 may be from 50°C to 80°C. Next, the hand mold 20 is dipped into a coagulant (STEP 2). Typical coagulant is an aqueous calcium nitrate solution. The dipping time period may be from 30 seconds to 60 seconds. To the surface of the hand mold 20 picked up from the coagulant is adhered the coagulant. Next, this coagulant is dried (STEP 3) . The drying is conducted under a circumstance of from 40°C to 70°C.

Next, the hand mold 20 is dipped into a transparent rubber latex composition (STEP 4). The dipping time period may be from 15 seconds to 30 seconds. In this rubber latex composition are blended a crosslinking agent, a vulcanization accelerator, a crosslinking activator, a surfactant and various kinds of additives in addition to the base rubber. The term "transparent latex composition" means a latex composition that exhibits transparency upon crosslinking or hardening. The transparent latex composition is not required to be transparent in the stage of being a latex. In place of the rubber latex composition, a resin emulsion composition may be also used. In the present invention, exemplary latex composition involves rubber latex compositions and resin emulsion compositions.

To the surface of the hand mold 20 picked up from the rubber latex composition is adhered the rubber latex composition. Next, this rubber latex composition is dried (STEP 5) . The drying is conducted under a circumstance of from 40°C to 70°C. The drying results in formation of the coat layer 8 comprising a crude rubber on the surface of the hand mold 20.

Next, the hand mold 20 is dipped into the water 18 filled in the water bath 12 shown in Fig. 3 and Fig. 4 (STEP 6). As described above, a spiral-patterned ink layer 30 is formed on the surface of the water 18 through ununiform dispersion of the ink 28. As the hand mold 20 sinks, the ink layer 30 is gradually transferred to the surface of the coat layer 8. Because the ink 28 is lipophilic, the ink 18 is not detached from the coat layer 8 even though the hand mold 20 is picked up from the water. Accordingly, the decorative layer 6 comprising the ink 18 is formed. Next, the decorative layer 6 is dried (STEP 7). While drying, the solvent included in the ink 28 is evaporated. While drying, the water 18 adhered to the coat layer 8 and the decorative layer 6 is also evaporated. A pattern is formed with this decorative layer 6. The pattern may vary depending on the number of colors and amount of the ink 18 supplied to the water bath 12, timing of supplying the ink 18, time period and rotation velocity of stirring, shape and size of the blade 32, and the like.

Next, the hand mold 20 is dipped into another rubber latex composition (STEP 8). The dipping time period is from 30 seconds to 60 seconds. This rubber latex composition may be either transparent or nontransparent. In this rubber latex composition are blended a crosslinking agent, a vulcanization accelerator, a crosslinking activator, a surfactant, a colorant and various types of additives in addition to the base rubber. In place of the rubber latex composition, a resin emulsion composition may be also used.

When the hand mold 20 is picked up from the rubber latex composition, the rubber latex composition is adhered to the surface of the decorative layer 6. Next, this rubber latex composition is dried (STEP 9). The drying is conducted under a circumstance of from 50°C to 80°C. The drying results in formation of the base layer 4 comprising a crude rubber on the surface of the hand mold 20.

Next, on the surface of the base layer 4 is coated a surface treatment agent (STEP 10). Examples of typical surface treatment agent include modified urethane and acryl-modified butadiene rubber. By coating the surface treatment agent, activity of the surface of the base layer 4 is elevated. By elevating the activity, wearing and taking off of the glove 2 can be readily conducted.

Next, the hand mold 20 is allowed to stand under a circumstance of 90°C or greater and 150°C or less. Thus, a crosslinking reaction of the rubber is caused (STEP 11). According to the crosslinking, physical properties are imparted to the coat layer 8 and the base layer 4. The decorative layer 6 cohesively contacts with the coat layer 8 and the base layer 4. Accordingly, the glove 2 is obtained.

Next, the glove 2 is removed from the hand mold 20. This step is referred to as mold removal (STEP 12). Concurrently with the mold removal, the glove 2 is turned inside out. By turning it inside out, the coat layer 8 appears on the obverse face. Because the coat layer 8 is transparent as described above, the decorative layer 6 is visible through the coat layer 8. Thereafter, the gloves 2 are shipped following steps of drying, treatment with chlorine, cutting, marking and the like as needed.

This glove 2 has a marble pattern formed with the decorative layer 6. This glove 2 is excellent in designing performances. This glove 2 has an apparently distinct appearance from that of conventional gloves exhibiting single color. According to this method of manufacture, gloves 2 which achieve wide color variations can be obtained. In addition, the pattern of this glove 2 is yielded incidentally, therefore, patterns of two gloves 2 can not be identical. By way of such gloves 2, separate use for each application can be readily carried out.

The gloves according to the present invention are suited for household affairs at general home. The gloves are also suited for occupations at restaurants. In addition, the gloves are also suited for outdoor operations.

The foregoing description is merely an illustrative example, and various modifications may be made without departing from the principle of the present invention.

## Claims

1. A method of manufacturing a glove (2) which comprises:
a first step (STEP 4) for forming a coat layer (8) on a hand mold (20) by dipping,
a second step (STEP 6) of forming a decorative layer (6) on the surface of said coat layer (8), and
a third step (STEP 8) for forming a base layer (4) by dipping,
***characterized in that***
the hand mold (20) is dipped into a transparent latex composition in the first step (STEP 4),
the hand mold (20) is dipped into water (18) including an ink (28) floated and ununiformly dispersed on the surface thereof, and the decorative layer (6) is formed by transfer of the ink (28) to the surface of the coat layer (8) in said second step (STEP 6), and
the hand mold (20) is dipped into another latex composition in the third step (STEP 8).

2. A glove (2) having a base layer (4) which comprises rubber as a base material, a coat layer (8) which comprises a polymer as a base material and which is transparent, and a decorative layer (6) positioned between the base layer (4) and the coat layer (8),
***characterized in that***
a marble pattern is formed with the decorative layer (6),
the base material of said coat layer (8) is a rubber, and
a rubber ink (28) is used in the decorative layer (6).

## Patentansprüche

1. Verfahren zum Herstellen eines Handschuhs (2), das umfasst:
einen ersten Schritt (SCHRITT 4) zum Bilden einer Beschichtungslage (8) auf einer Handform (20) durch Eintauchen,
einen zweiten Schritt (SCHRITT 6) des Bildens einer Dekorationslage (6) auf der Oberfläche der Beschichtungslage (8), und
einen dritten Schritt (SCHRITT 8) zum Bilden einer Basislage (4) durch Eintauchen,
**dadurch gekennzeichnet, dass**
die Handform (20) in dem ersten Schritt (SCHRITT 4) in eine transparente Latexmischung eingetaucht wird,
die Handform (20) in Wasser (18) eingetaucht wird, das eine Tinte (28) umfasst, welche auf dessen Oberfläche schwimmt und ungleichmäßig verteilt ist, und die Dekorationslage (6) in dem zweiten Schritt (SCHRITT 6) durch Transfer der Tinte (28) auf die Oberfläche der Beschichtungslage (8) gebildet wird, und
die Handform (20) in dem dritten Schritt (SCHRITT 8) in eine weitere Latexmischung eingetaucht wird.

2. Handschuh (2) mit einer Basislage (4), die Kautschuk als ein Basismaterial umfasst, einer Beschichtungslage (8), die ein Polymer als ein Basismaterial umfasst und die transparent ist, und einer Dekorationslage (6), die zwischen der Basislage (4) und der Beschichtungslage (8) angeordnet ist,
**dadurch gekennzeichnet, dass**
ein Marmormuster mit der Dekorationslage (6) gebildet ist,
das Basismaterial der Beschichtungslage (8) ein Kautschuk ist, und
eine Kautschuktinte (28) in der Dekorationslage (6) verwendet wird.

## Revendications

1. Procédé pour fabriquer un gant (2), qui comprend :
une première étape (ETAPE 4) pour former une couche de revêtement (8) sur un moule en forme de main (20) au tremper,
une seconde étape (ETAPE 6) pour former une couche décorative (6) sur la surface de ladite couche de revêtement (8), et
une troisième étape (ETAPE 8) pour former une couche de base (4) au tremper,
**caractérisé en ce que**
le moule en forme de main (20) est trempé dans une composition de latex transparente dans la première étape (ETAPE 4),
le moule en forme de main (20) est plongé dans de l'eau (18) qui inclut une encre (28) en flottement et dispersée de façon de non uniforme sur la surface de celle-ci, et la surface décorative (6) est formée par transfert de l'encre (28) sur la surface de la couche de revêtement (8) dans ladite seconde étape (ETAPE 6), et
le moule en forme de main (20) est plongé dans une autre composition au latex dans la troisième étape (ETAPE 8).

2. Gant (2) ayant une couche de base (4) qui comprend du caoutchouc à titre de matériau de base, une couche de revêtement (8) qui comprend un polymère à titre de matériau de base et qui est transparente, et une couche décorative (6) positionnée entre la couche de base (4) et la couche de revêtement (8),
**caractérisé en ce que**
un motif marbré est formé avec la couche décorative (6),
le matériau de base de ladite couche de revêtement (8) est un caoutchouc, et
une encre au caoutchouc (28) est utilisée dans la couche décorative (6).
